# EUROPÄISCHE PATENTSCHRIFT

(11) **EP 3 035 803 B1**
(45) Veröffentlichungstag und Bekanntmachung des Hinweises auf die Patenterteilung: **23.09.2020**
(21) Anmeldenummer: 14753094.3
(22) Anmeldetag: 21.08.2014
(51) Int. Cl.: A21B 1/46, A21B 7/00, A21B 3/07

(54) **VORRICHTUNG ZUM BACKEN VON TEIGLINGEN**
DEVICE FOR BAKING PIECES OF DOUGH
DISPOSITIF POUR LA CUISSON DE PÂTONS

(30) Priorität: 23.08.2013 DE 102013109141
(43) Veröffentlichungstag der Anmeldung: 29.06.2016
(73) Patentinhaber: R. Weiss Verpackungstechnik GmbH & Co. KG, 74564 Crailsheim (DE)
(72) Erfinder: WEISS, Reinald, 91626 Schopfloch (DE)
(74) Vertreter: Schlief, Thomas P.
(86) Internationale Anmeldenummer: PCT/EP2014/067834
(87) Internationale Veröffentlichungsnummer: WO 2015/024999

(56) Entgegenhaltungen:
- EP-A2- 1 688 042
- EP-A2- 1 719 411
- DE-A1-102005 002 475
- DE-A1-102005 012 536
- DE-A1-102009 026 619

## Beschreibung

Die Erfindung betrifft eine Vorrichtung zum Backen von Teiglingen nach dem Oberbegriff des Anspruchs 1.

Eine solche Vorrichtung ist beispielsweise in der DE 10 2009 026 619 A1 beschrieben, welche insbesondere in Supermärkten eingesetzt werden kann und in der Lage ist, rohe oder vorgebackene Teiglinge verzehrfertig zu backen. Kunden können dann selbst ihre Auswahl unter verschiedenen Backwaren treffen, indem sie über die Bedieneinheit, beispielsweise einen Touchscreen, Anzahl und Art der gewünschten Backwaren anfordern.

Die DE 10 2005 002 475 A1 offenbart einen Backofen mit einem Backraum, der in mindestens zwei Backzonen unterteilt ist, wobei jeder Backzone eine eigene Fördereinrichtung zugeordnet ist. In jeder Backzone ist jeweils eine Fördereinrichtung angeordnet, wobei jede Fördereinrichtung ein angetriebenes, vertikal angeordnetes Endlos-Backband umfasst, das um zwei übereinander angeordnete Umlenkelemente umläuft. Jedes Endlos-Backband weist hierbei eine Mehrzahl von Backkammern auf, die jeweils durch Kammer-Trennkörper voneinander getrennt sind.

Die EP 1 719 411 A2 offenbart zwei parallel verlaufende Förderketten, an bzw. zwischen denen gondelförmige Tragmittel aufgehängt sind, um diese Tragmittel schwenkbar zu lagern. In den Tragmitteln sind Teiglinge aufgenommen, die mäanderförmig durch einen Backofen transportiert werden.

Nachteilig bei den bekannten Vorrichtungen ist ihr relativ großer Platzbedarf, der aus ihrer Komplexität und der kundenseitig gewünschten Produktvielfalt resultiert.

Es ist Aufgabe der vorliegenden Erfindung, eine kompakte und kostengünstige, aber dennoch flexible Vorrichtung zum Backen von Teiglingen zur Verfügung zu stellen.

Diese Aufgabe wird bei der eingangs genannten Vorrichtung dadurch gelöst, dass der Durchlaufbackofen nur einen Ofenraum aufweist und die Fördereinrichtung mindestens zwei den Ofenraum durchlaufende Förderbänder umfasst, welche Teiglinge gleichzeitig durch den Ofenraum zu transportieren vermögen.

Die Vorteile der Erfindung sind insbesondere darin zu sehen, dass lediglich ein einziger Ofenraum vorgesehen ist, durch den mindestens zwei Förderbändern führen, die gleichzeitig verschiedenartige Teiglinge durch diesen einzigen Ofenraum zu fördern vermögen. Hierdurch wird eine beträchtliche Platzeinsparung erreicht, während mittels der mindestens zwei Förderbänder dennoch eine große Flexibilität ermöglicht wird, welche durch geometrische und/oder steuerungstechnische Maßnahmen realisiert werden kann.

Erfindungsgemäß verlaufen die mindestens zwei Förderbänder parallel nebeneinander, vorzugsweise horizontal oder leicht geneigt, verlaufen. Eine solche Anordnung trägt dazu bei, die erfindungsgemäße Vorrichtung kompakt zu gestalten. Die Hitze in diesem einzigen Backofen wird vorzugsweise gleichmäßig auf den Bereich der mindestens zwei Förderbänder verteilt. Alternativ wird eine in Bezug auf die Förderbänder ungleichmäßige Hitzeverteilung im einzigen Ofenraum erwirkt, beispielsweise durch unterschiedliche Hitzeabstrahlelemente oder Hitzebarrieren im Ofenraum.

Gemäß einer vorteilhaften Ausgestaltung der Erfindung weisen die Förderbänder unterschiedliche Förderbreiten auf, um beispielsweise auf einem breiteren Förderband hintereinander angeordnete Brote oder Baguettes und auf einem schmaleren Förderband kleinere Backwaren wie Brötchen zu backen.

Selbstverständlich ist es auch möglich, auf den breiten Bändern mehrere kleinere Backwaren nebeneinander zu backen.

Weiterhin ist eine elektrische Steuereinrichtung vorgesehen, mit welcher die Geschwindigkeiten der Förderbänder unabhängig voneinander einstellbar sind. Auf diese Weise können Backwaren auf einem Förderband, die eine längere Backzeit benötigen, beispielsweise Brote, langsamer durch den Ofenraum gefördert werden als Backwaren, die in kürzerer Backzeit fertiggebacken werden, beispielsweise Brötchen. Hierbei ist es bevorzugt, wenn die Geschwindigkeiten der beiden Förderbänder variabel einstellbar sind.

Mit besonderer Bevorzugung ist mit der elektrischen Steuereinrichtung eine unterschiedliche Taktung der Förderbänder für die Verweilzeit von vorzugsweise intermittierend transportierten Teigwaren im Backofen einstellbar. So können beispielsweise auf einem Förderband lagernde Brote längere Zeit im Ofenraum verbleiben als auf einem anderen Förderband lagernde Brötchen. Ein oder beide (oder alle) Förderbänder können dabei während des Backprozesses einmal oder mehrmals angehalten werden. In Kombination mit einer Möglichkeit, die Förderbänder mit unterschiedlichen Geschwindigkeiten laufen zu lassen, ergeben sich noch größere Variationsmöglichkeiten.

Eine flexible und einfache Aufstellung der erfindungsgemäßen Vorrichtung wird realisiert, indem der mindestens eine Eingangsspeicher, der Durchlaufbackofen und der mindestens eine Ausgangsspeicher in unterschiedlichen Gehäusen angeordnet sind. Auf diese Weise ist nicht nur eine relativ unkomplizierte Montage möglich, sondern es ist beispielsweise der Ausgangsspeicher in einem Verkaufsraum eines Supermarkts aufstellbar, während Eingangsspeicher und Durchlaufbackofen hinter einer Wand in einem nur für Angestellte des Supermarkts zugänglichen Raum aufstellbar sind.

Einer weiteren Raumeinsparung kommt es zugute, wenn in dem mindestens einen Eingangsspeicher und/oder Ausgangsspeicher mäander- bzw. schlangenförmig geführte Endlosbänder angeordnet sind. Vorzugsweise sind an diesen umlaufende Speicherträger zur Aufnahme von Teiglingen bzw. fertigen Backwaren in dem jeweiligen Speicher befestigt, wobei die hauptsächliche Bewegung dieser Speicherträger in Vertikalrichtung erfolgt.

Weiterhin wird eine Ausnutzung beengter Räumlichkeiten dadurch erreicht, dass gemäß einer bevorzugten Ausführungsform der Transportweg für die Teiglinge vom Eingangsspeicher in den Backofen nicht-linear ist. Insbesondere kann vorgesehen sein, dass der besagte Transportweg mindestens einmal, vorzugsweise zweimal, Richtungswechsel von ca. 90° aufweist. Insbesondere ist bevorzugt, wenn die Teiglinge quer vor den Ofen transportiert werden.

Bei einer bevorzugten Variante, mit der beispielsweise ein solcher Quertransport realisierbar ist, ist eine Transporteinrichtung zum Transport der Teiglinge vom Eingangsspeicher zum Backofen vorgesehen, welche oberhalb der Aufgabeeinrichtung und über deren Breite verlaufend angeordnet ist. Die Teiglinge können bei einer entsprechenden Variante von der Oberseite des Eingangsspeichers auf die Transporteinrichtung verbracht werden, welche die Teiglinge dann seitlich abfördert und insbesondere quer vor den Backofen transportiert.

Besonders wenn mehrere Teiglinge nebeneinander durch die Aufgabeeinrichtung in den Eingangsspeicher eingelegt werden, ist es von Vorteil, wenn die Relativlage dieser Teiglinge zueinander im Wesentlichen während des Transports zum Backofen, im Backofen und dem Abtransport aus dem Backofen beibehalten wird, zumindest bis zum Speichern der fertig gebackenen Teiglinge im Ausgangsspeicher.

Vorteilhafte Weiterbildungen der Erfindung sind durch die Merkmale der Unteransprüche gekennzeichnet.

Im Folgenden wird die Erfindung anhand von Figuren näher erläutert. Es zeigen:
- **Fig. 1**: einen erfindungsgemäßen Vorrichtung im Querschnitt;
- **Fig. 2**: die Vorrichtung gemäß der Figur 1 in einer Draufsicht;
- **Fig. 3**: die Vorrichtung gemäß der Figuren 1 und 2 von der Bedienerseite her, und
- **Fig. 4a, b**: eine schematischen Querschnitt durch den Backofen und eine schematische Draufsicht auf die Förderbänder des Backofens.

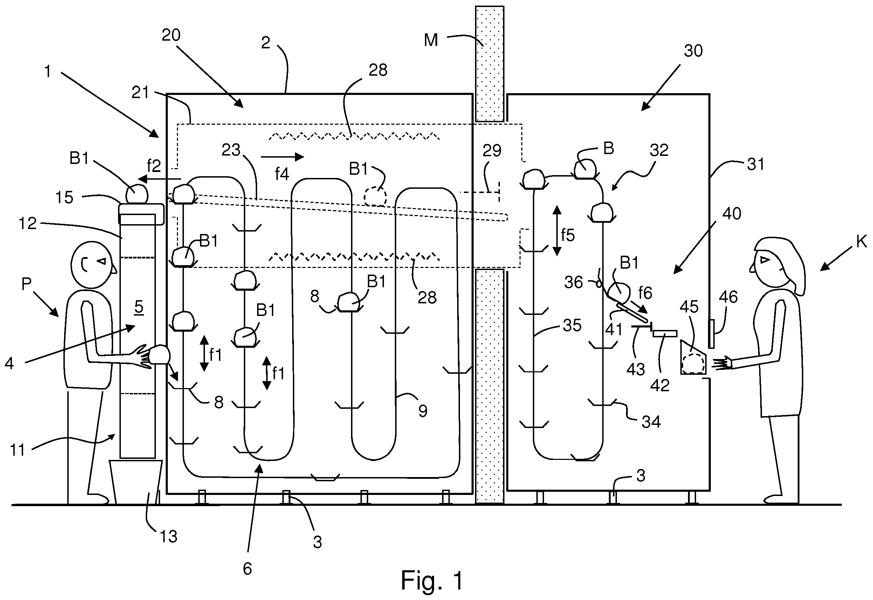

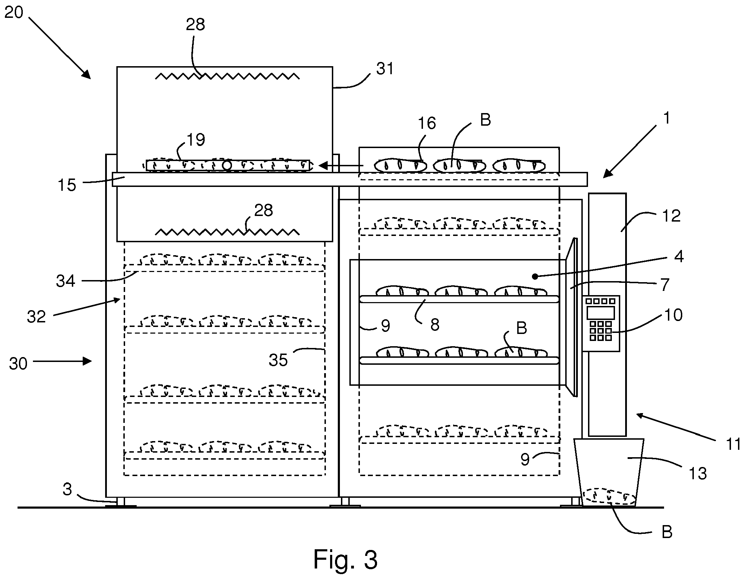

Die Figuren 1-3 zeigen schematische Ansichten einer erfindungsgemäßen Vorrichtung zum Backen bzw. Aufbacken von Teiglingen, wobei der Übersichtlichkeit halber einige Teile nicht in allen Figuren wiedergegeben sind. Die Vorrichtung weist einen Eingangsspeicher 1 auf, dem eine Aufgabeeinrichtung 4 zugeordnet ist. Im gezeigten Ausführungsbeispiel weist die Aufgabeeinrichtung 4 eine mittels einer Tür 7 (s. Fig. 3) verschließbare Öffnung 5 auf, durch welche Teiglinge B (Brötchen, Brote, Baguette, Brezel usw.) auf umlaufende Speicherträger 8 der Eingangsspeicher 1 auflegbar sind.

Der Eingangsspeicher 1 weist ein auf Füßen 3 stehendes Gehäuse 2 auf, in welchem eine Fördereinrichtung 6 in Form eines Paternosteraufzugs angeordnet ist. Dieser umfasst eine Vielzahl der besagten länglichen Speicherträger 8, die an ihren jeweiligen Stirnseiten mit motorbetriebenen Förderketten 9 verbunden sind. Das Personal kann über ein Eingabepanel mit Display 10 (s. Fig. 3), das mit einer entsprechenden Steuerung (nicht dargestellt) verbunden ist, einen freien, d.h. noch nicht mit Backwaren B bestückten Speicherträger 8 anfordern. Auf dem Display 10 können zudem Anweisungen für das Personal ausgegeben werden, welche Backwarensorte beispielsweise im Moment aufgrund des Kundenbedarfs gebacken werden soll. Die erste Fördereinrichtung 6 läuft in Doppelpfeilrichtung f1 um, kann also in beiden Richtungen betrieben werden. Insbesondere bei Anforderung eines freien Trägers 8 zur Bestückung mit Backwaren B bietet sich dieses an, um ggf. die Fahrzeit eines entsprechenden Trägers 8 zu verkürzen.

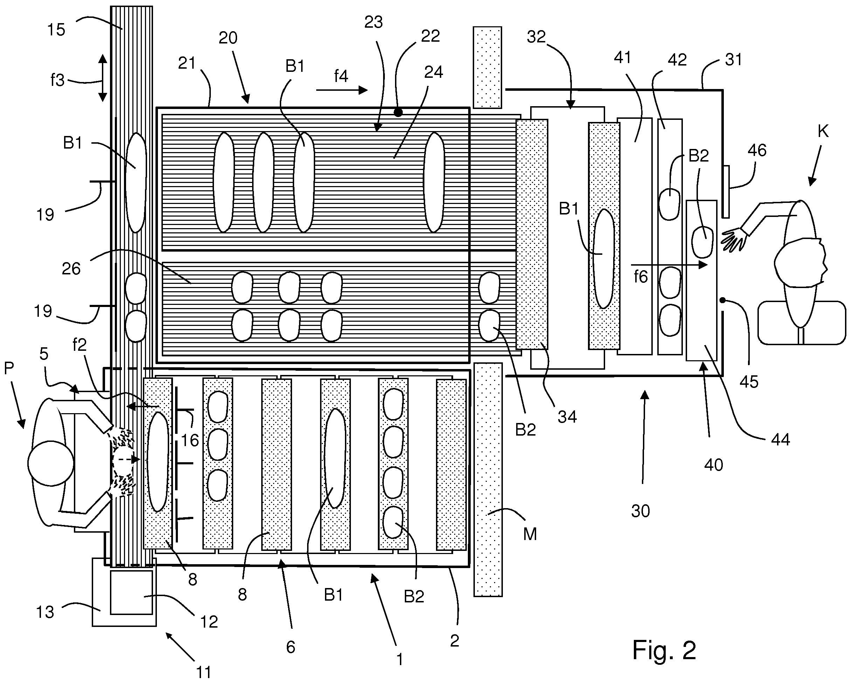

Die vorgebackenen oder noch nicht gebackenen Backwaren B werden in der umlaufenden Fördereinrichtung 6 gespeichert, bis eine nicht dargestellte, dem Fachmann bekannte Steuerung ihren Weitertransport veranlasst. Zu diesem Zweck ist im oberen Bereich, auf der dem Bedienpersonal P zugewandten Seite ein Linearförderer 15 vorgesehen, der beispielsweise als Förderband ausgebildet ist und seitwärts in Richtung der Längserstreckung der Speicherträger 8 verläuft. Wie insbesondere den Figuren 1 und 2 zu entnehmen ist, werden Backwaren B von einem entsprechend in Position gefahrenen Speicherträger 8 durch Schieber 16 auf den Linearförderer 15 geschoben (Pfeil f2). Andere Übergabemechanismen sind ohne Weiteres ebenfalls möglich, beispielsweise durch Abkippen der Backwaren B von den Speicherträgern 8 auf den Linearförderer 15.

Die Laufrichtung des Linearförderers 15 ist umkehrbar, s. Doppelpfeil f3. Im Vorwärtslauf transportiert der Linearförderer 15 die Backwaren B zu einem nachfolgend zu beschreibenden Durchlaufbackofen 20. Zum Transport der Backwaren B vom Linearförderer 15 in den Durchlaufbackofen 20 sind vorliegend motorangetriebene Schieber 19 vorgesehen.

Des Weiteren ist für den Linearförderer 15 eine Sammeleinrichtung 11 vorgesehen, welche sich an seiner der Ofeneinheit 20 abgewandten Stirnseite befindet. Die Sammeleinrichtung 11 besteht im vorliegenden Fall aus einem senkrecht verlaufenden Fallschacht 12 und einem darunter abgestellten Sammelbehälter 13, der manuell entleert werden kann. Wenn Backwaren B nicht erfolgreich vom Linearförderer 15 auf die Transporteinrichtung 22 geschoben werden konnten, wird die Förderrichtung des Linearförderers 15 umgekehrt und dieser so lange betrieben, bis alle sich auf ihm noch befindlichen Backwaren B in den Fallschacht 12 abgeworfen wurden.

Der besagte Durchlaufbackofen 20 (im Folgenden auch nur kurz Ofen genannt) ist in einem Gehäuse 21 untergebracht und in der Fig. 1 gestrichelt angedeutet, da er hinter dem Eingangsspeicher 1 angeordnet und daher in der seitlichen Darstellung der Fig. 1 eigentlich nicht sichtbar ist. Im Ofen 20 sind Heizelemente 28 schematisch dargestellt, wobei vorzugsweise noch Ventilatoren vorgesehen sein können, um die erhitzte Luft schnell und gleichmäßig im Ofenraum 22 zu verteilen. Durch den Ofenraum 23 hindurch führt eine Fördereinrichtung 23, auf der die zu backenden Teiglinge B aufliegen. Die Fördereinrichtung 23 als wesentlicher Bestandteil der Erfindung wird weiter unten beschrieben.

Die Ofeneinheit 20 ist von unten zugänglich, da durch die Zwischenschaltung des Linearförderers 15 die Backwaren zweimal um 90° umgelenkt werden. Für Bedien- und Servicepersonal ergibt sich somit eine sehr einfache Zugänglichkeit zur Ofeneinheit 20.

An den Durchlaufbackofen 20 schließt sich ein Ausgangsspeicher 30 an, welcher die fertig gebackenen Teiglinge B speichert und nach Kundenabruf über eine Ausgabeeinheit 40 abgibt. Das auf Füßen 3 stehende Gehäuse 31 des Ausgangspeichers 30 ist zur Aufstellung in einem Verkaufsraum eines Supermarkts o.ä. vorgesehen, wobei zur Minimierung der Standfläche der erfindungsgemäßen Vorrichtung der Eingangsspeicher 1 und der Durchlaufbackofen 20 außerhalb des Verkaufsraums und von diesem durch eine Mauer M getrennt aufgestellt werden.

Nach dem Backen bzw. Aufbacken werden die Backwaren mittels Schieber 29 (nur in Figur 1 dargestellt) von der Transporteinrichtung 23 auf umlaufende Speicherträger 34 einer zweiten umlaufenden Fördereinrichtung 32 in Form eines Paternosteraufzugs geschoben, der - durch stirnseitige Förderketten 35 angetrieben - in dem Ausgangsspeicher 30 angeordnet ist und die fertig gebackenen Backwaren B bis zur Abgabe an einen Kunden K speichert. Die zweite Fördereinrichtung 32 ist entsprechend dem Doppelpfeil f5 drehrichtungsumkehrbar betreibbar. Eine entsprechende Bedieneinheit 46 für den Kunden K weist eine Anzeige und beispielsweise Tasten für den Abruf der verschiedenen verfügbaren Backwaren B auf, welche in einem Ausgabefach 45 dem Kunden K zur Entnahme zur Verfügung gestellt werden.

Zwischen der Fördereinrichtung 32 und dem Ausgabefach 45 ist ein Zwischenspeicher 42 vorgesehen, auf den die Backwaren B gemäß der hier dargestellten Ausführungsform von einem Speicherträger 34 gekippt werden. Hierzu läuft der auszuleerende Speicherträger 34 von oben gegen - durch elektronische Ansteuerung in eine Ruhe- und eine Arbeitsposition verfahrbare - Stifte 36 an, wobei dieser Speicherträger 34 zum Ausgabefach 45 hin verschwenkt wird. Die Backwaren B rutschen dann auf einer ersten, zum Ausgabefach hin geneigten Rutsche 41 auf den genannten Zwischenspeicher 42 (Pfeil f6), von dem eine oder mehrere Backwaren B nach Anforderung durch einen Kunden K mittels Schieber 43 in eine quer zum Ausgabefach 45 geneigte Trichterrutsche 44 geschoben werden, auf der die angeforderten Backwaren B zu dem Ausgabefach 45 gleiten.

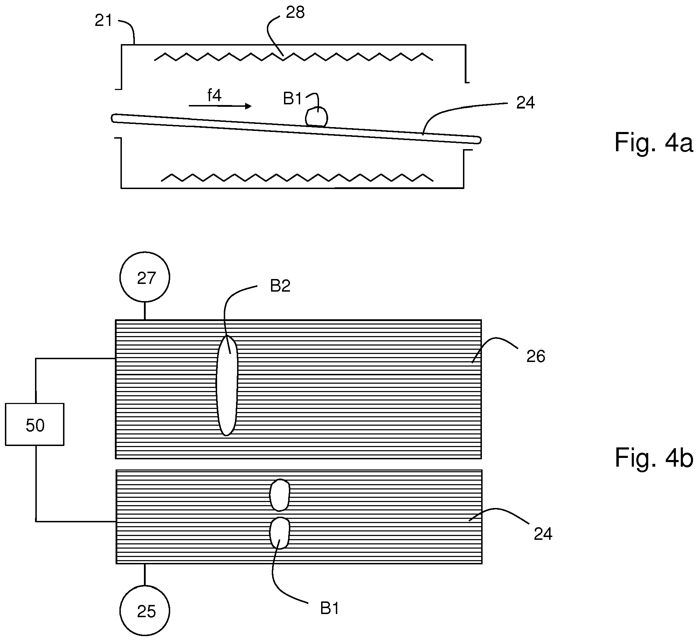

Zurückkommend auf den Durchlaufbackofen 20 umfasst die besagte Fördereinrichtung 23 mindestens zwei den Ofenraum 22 durchlaufende Förderbänder 24, 26, welche die Teiglinge B in Pfeilrichtung f4 zum Ausgangsspeicher 30 fördern. Es ist hierbei wichtig, dass lediglich ein einziger Ofenraum 22 vorhanden ist. Die beiden Förderbänder 24, 26, die beispielsweise als umlaufender Kettenglied- bzw. Netzförderer ausgebildet sein können, sind gemäß der dargestellten Ausführungsform parallel nebeneinander verlaufend angeordnet und vorliegend leicht in Transportrichtung abwärts geneigt (s. Fig. 1 und 4a). Auf den beiden Transportbändern 24, 26 können Teiglinge B gleichzeitig durch den Ofenraum 22 transportiert werden. Die Teiglinge B auf den Förderbändern 24, 26 sind vorzugsweise verschiedenartiger Natur; angedeutet ist dies mit den Bezugszeichen B1 und B2, wobei B1 vorliegend Brötchen und B2 Baguettes symbolisieren. Im Gegensatz zum Stand der Technik ermöglicht die erfindungsgemäße Vorrichtung somit das Backen von Teiglingen unterschiedlicher Art in demselben Ofenraum auf unterschiedlichen Förderbändern.

In dem dargestellten Ausführungsbeispiel weisen die Förderbänder 24, 26 unterschiedliche Breiten aufweisen, wie insbesondere aus den Fig. 2 und 4 ersichtlich ist. Bei einer Anordnung der Bänder nahe beieinander ohne nennenswerte Lücke ergibt sich somit eine große Flexibilität hinsichtlich der zu backenden bzw. aufzubackenden Teiglinge, ohne dass Abstriche bei der Gesamtbreite hingenommen werden müssten.

In der Fig. 4 ist schematisch eine elektrische Steuereinrichtung 50 dargestellt, mittels deren die Geschwindigkeiten der beiden Förderbänder 24, 26 unabhängig voneinander einstellbar sind. Die Steuereinrichtung steuert hierbei den jeweiligen Motor 25 bzw. 27 des ersten oder des zweiten Förderbandes 24 bzw. 26. Somit kann das für langsamer zu backende bzw. aufzubackende Teiglinge vorgesehene Förderband 24 bzw. 26 auch langsamer durch den Ofenraum 22 laufen, während schneller zu backende bzw. aufzubackende Teiglinge, die auf dem anderen Förderband 26 bzw. 24 transportiert werden, den Ofenraum 22 schneller durchlaufen. Hierdurch wird also eine beträchtliche Effizienzsteigerung erzielt.

Die Steuerung 50 kann auch als zentrale Steuerung oder als Teil einer zentralen Steuerung ausgebildet sein. Diese ermittelt beispielsweise den Bedarf an nachzubackenden Backwaren und zeigt dies an dem Eingabepanel mit Display 10 an.

Die elektrische Steuereinrichtung 50 kann alternativ oder zusätzlich derart eingerichtet und ausgebildet sein, dass mit ihr eine unterschiedliche Taktung für die Verweilzeit von vorzugsweise intermittierend transportierten Teiglingen B1, B2 im Backofen 20 einstellbar ist. Auf diese Weise können die Förderbänder 24, 26 beispielsweise mit gleicher oder unterschiedlicher Geschwindigkeit durch den Ofenraum 22 laufen. Eines oder beide Förderbänder 24, 26 können ein oder mehrere Male im Ofenraum 22 anhalten. Beispielsweise kann das eine Förderband 24 bzw. 26 anhalten, während das andere Förderband 26 bzw. 24 weiterläuft.

Es ist hierbei auch möglich, dass beide Förderbänder 24, 26 von demselben Motor angetrieben werden, also prinzipiell gleich schnell laufen, aber durch eine Rutschkupplung oder eine ähnlich Einrichtung eines der beiden Förderbänder 24 oder 26 - veranlasst durch die Steuereinrichtung 50 - vorübergehend angehalten wird.

Mittels der Erfindung ist es möglich, sehr effizient und flexibel eine große Anzahl unterschiedlicher Teiglinge zu backen bzw. aufzubacken. Beispielsweise ist es auch möglich, auf einem oder beiden Förderbändern 24, 26 mehr als nur jeweils eine Teiglingart (also nicht nur Teiglinge B1 und B2) zu fördern. Auf dem Förderband 24 können z.B. größere Brötchen in der Nähe der Ausgabe, kleinere Brötchen in der Mitte und wieder größere Brötchen in der Nähe der Aufgabe angeordnet sein. Auf dem Förderband 26 kann eine ähnlich differenzierte Belegung von unterschiedlichen Teiglingen vorliegen. Dann ist es mittels der erfinderischen Ausgestaltung möglich, das Förderband 24 zunächst relativ langsam laufen zu lassen, damit die größeren Brötchen hinreichend aufgebacken werden. Nach deren Ausgabe wird der Motor 25 für einen schnelleren Lauf des Förderbands 24 angesteuert, bis die kleineren Brötchen ausgegeben sind. Anschließend läuft das Förderband 24 dann wieder langsamer, so dass die letzten größeren Brötchen nicht zu schnell den Ofen 20 verlassen. Da ein vergleichbarer Ablauf bezüglich des zweiten Förderbandes 26 - und zwar vollständig unabhängig vom ersten Förderband 24 - realisierbar ist, ergibt sich eine sehr hohe Flexibilität und Variabilität.

### Bezugszeichenliste

- 1: Eingangsspeicher
- 2: Gehäuse
- 3: Füße
- 4: Aufgabeeinrichtung
- 5: Öffnung
- 6: Fördereinrichtung
- 7: Tür
- 8: Speicherträger
- 9: Förderkette
- 10: Eingabepanel mit Display
- 11: Sammeleinrichtung
- 12: Fallschacht
- 13: Sammelbehälter
- 15: Linearförderer
- 16: Schieber
- 19: Schieber
- 20: Durchlaufbackofen
- 21: Gehäuse
- 22: Ofenraum
- 23: Fördereinrichtung
- 24: erstes Förderband
- 25: Motor
- 26: zweites Förderband
- 27: Motor
- 28: Heizelemente
- 29: Schieber
- 30: Ausgangsspeicher
- 31: Gehäuse
- 32: Fördereinrichtung
- 34: Speicherträger
- 35: Förderkette
- 36: Stift
- 40: Ausgabeeinheit
- 41: erste Rutsche
- 42: Zwischenspeicher
- 43: Schieber
- 44: Trichterrutsche
- 45: Ausgabefach
- 46: Bedieneinheit
- 50: Steuereinrichtung
- M: Mauer
- B, B1, B2: Teiglinge

## Patentansprüche

1. Vorrichtung zum Backen bzw. Aufbacken von Teiglingen (B1, B2),
mit mindestens einem Eingangsspeicher (1) und mindestens einer zugeordneten Aufgabeeinrichtung (4) zum Aufgeben und Speichern von insbesondere verschiedenartigen Teiglingen (B1, B2),
mit einem Durchlaufbackofen (20) zum Backen bzw. Aufbacken der Teiglinge (B1, B2), mit einer Fördereinrichtung (23) zum Fördern von Teiglingen (B1, B2) von dem mindestens einen Eingangsspeicher (1) durch den Backofen (20),
mit mindestens einem Ausgangsspeicher (30) zum Aufnehmen und Speichern der in dem Backofen (20) zu Backwaren gebackenen Teiglinge (B1, B2), sowie
mit mindestens einer Ausgabeeinheit (40) für die Backwaren und mit einer Bedieneinheit (46), wobei nach entsprechender Kundenanforderung über die Bedieneinheit (46) angeforderte Backwaren (B1, B2) von dem mindestens einen Ausgangsspeicher (30) zur Ausgabeeinheit (40) transportiert und dort ausgebbar sind,
**dadurch gekennzeichnet, dass** der Durchlaufbackofen (20) nur einen Ofenraum (22) aufweist und die Fördereinrichtung (23) mindestens zwei den Ofenraum (22) in einer Förderrichtung (f4) durchlaufende Förderbänder (24, 26) zum Fördern der Teiglinge (B1, B2) auf diesen Förderbändern (24, 26) umfasst, wobei diese Förderbänder (24, 26) Teiglinge (B1, B2) gleichzeitig durch den Ofenraum (22) zu transportieren vermögen, wobei die mindestens zwei Förderbänder (24, 26) in Förderrichtung (f4) parallel nebeneinander verlaufen, und wobei eine elektrische Steuereinrichtung (50) vorgesehen ist, mit welcher die Geschwindigkeiten der Förderbänder (24, 26) unabhängig voneinander einstellbar sind.

2. Vorrichtung nach Anspruch 1, **dadurch gekennzeichnet, dass** die mindestens zwei Förderbänder (24, 26) horizontal oder leicht geneigt verlaufen.

3. Vorrichtung nach Anspruch 1 oder 2, **dadurch gekennzeichnet, dass** die Förderbänder (24, 26) unterschiedliche Förderbreiten aufweisen.

4. Vorrichtung nach mindestens einem der vorhergehenden Ansprüche, **dadurch gekennzeichnet, dass** die Geschwindigkeiten der Förderbänder (24, 26) variabel einstellbar sind.

5. Vorrichtung nach mindestens einem der vorhergehenden Ansprüche, **dadurch gekennzeichnet, dass** mit der elektrischen Steuereinrichtung (50) eine unterschiedliche Taktung für die Verweilzeit von vorzugsweise intermittierend transportierten Teiglingen (B1, B2) im Backofen (20) einstellbar ist.

6. Vorrichtung nach mindestens einem der vorhergehenden Ansprüche, **dadurch gekennzeichnet, dass** der mindestens eine Eingangsspeicher (1), der Durchlaufbackofen (20) und der mindestens eine Ausgangsspeicher (40) in unterschiedlichen Gehäusen (2, 21, 31) angeordnet sind.

7. Vorrichtung nach mindestens einem der vorhergehenden Ansprüche, **dadurch gekennzeichnet, dass** in dem mindestens einen Eingangs- und/oder Ausgangsspeicher (1; 30) mäander- bzw. schlangenförmig geführte Endlosbänder (6; 32) angeordnet sind, an welchen Speicherträger (8; 34) zur Aufnahme von Teiglingen (B1, B2) bzw. fertigen Backwaren in dem jeweiligen Speicher (1; 30) umlaufen, vorzugsweise in der Hauptsache in Vertikalrichtung.

8. Vorrichtung nach mindestens einem der vorhergehenden Ansprüche, **dadurch gekennzeichnet, dass** der Transportweg für die Teiglinge (B1, B2) vom Eingangsspeicher (1) in den Backofen (20) nicht-linear ist.

9. Vorrichtung nach einem der vorhergehenden Ansprüche, **dadurch gekennzeichnet, dass** der besagte Transportweg mindestens einmal, vorzugsweise zweimal, Richtungswechsel von ca. 90° aufweist.

10. Vorrichtung nach mindestens einem der vorhergehenden Ansprüche, **dadurch gekennzeichnet, dass** eine Transporteinrichtung (16), welche die Teiglinge (B1, B2) vom Eingangsspeicher (1) zum Backofen (20) transportiert, oberhalb der Aufgabeeinrichtung (4) und über deren Breite verlaufend angeordnet ist.

11. Vorrichtung nach mindestens einem der vorhergehenden Ansprüche, **dadurch gekennzeichnet, dass** der Durchlaufbackofen (20) ein Umluftbackofen ist.

## Claims

1. Device for baking or crisp baking dough pieces (B1. B2),
with at least one input storage (1) and at least one associated feeding device (4) for feeding and storing of especially various kinds of dough pieces (B1, B2).
with a continuous baking oven (20) for baking or crisp baking dough pieces (B1, B2), with a conveyor (23) for transporting dough pieces (B1, B2) from the at least one input storage (1) through the baking oven (20),
with at least one output storage (30) for receiving and storing the dough pieces (B1, B2) baked in the baking oven (20) to form bakery goods, as well as
with at least one dispensing unit (40) for the bakery goods and an operating unit (46), wherein after the respective customer request made through the operating unit (46), the requested bakery goods (B1, B2) are transported from the at least one output storage (30) to the dispensing unit (40) to be dispensed there,
**characterized in that** the continuous baking oven (20) has only one oven space (22) and the conveyor (23) comprises at least two conveyor belts (24, 26) passing through the oven space (22) in a conveying direction (f4), for conveying the dough pieces (B1, B2) on these conveyor belts (24, 26), wherein these conveyor belts (24, 26) being capable of transporting dough pieces (B1, B2) simultaneously through the oven space (22), wherein the at least two conveyor belts (24, 26) run parallel to one another in the conveying direction (f4) and wherein an electrical control device (50) is provided to adjust the speeds of the conveyor belts (24, 26) independently from each other.

2. Device according to claim 1, **characterized in that** the at least two conveyor belts (24, 26) run horizontally or slightly inclined.

3. Device according to claim 1 or 2, **characterized in that** the conveyor belts (24, 26) have different conveyor widths.

4. Device according to at least one of the previous claims, **characterized in that** the speeds of the conveyor belts (24, 26) can be adjusted in a variable way.

5. Device according to at least one of the previous claims, **characterized in that** by means of the electrical control device (50) a different clocking can be adjusted for the dwelling time of preferably intermittently transported dough pieces (B1, B2) in the baking oven (20).

6. Device according to at least one of the previous claims, **characterized in that** the at least one input storage (1), the continuous baking oven (20) and the at least one output storage (40) are arranged in different housings (2, 21, 31).

7. Device according to at least one of the previous claims, **characterized in that** endless belts (6; 32) are arranged in the at least one input and/or output storage (1; 30), which belts are guided in a meandering or serpentine manner and on which storage carriers (8; 34) for receiving dough pieces (B1, B2) or finished bakery goods circulate in the respective storage (1; 30), preferably mainly in the vertical direction.

8. Device according to at least one of the previous claims, **characterized in that** the transportation path for the dough pieces (B1, B2) is non-linear from the input storage (1) to the baking oven (20).

9. Device according to one of the previous claims, **characterized in that** said transportation path changes directions by about 90° at least once, preferably twice.

10. Device according to at least one of the previous claims, **characterized in that** a transportation device (16), which transports the dough pieces (B1, B2) from the input storage (1) to the baking oven (20), is arranged above the feeding device (4) and running across its width.

11. Device according to at least one of the previous claims, **characterized in that** the continuous baking oven (20) is a convection oven.

## Revendications

1. Dispositif pour cuir au four ou faire repasser au four des pâtons (B1, B2),
avec au moins un magasin d'entrée (1) et au moins un dispositif d'alimentation (4) associé pour l'alimentation et le stockage de pâtons (B1, B2), en particulier de types différents,
avec un four tunnel (20) pour cuir au four ou faire repasser au four les pâtons (B1, B2), avec un dispositif de transport (23) pour transporter les pâtons (B1, B2) depuis le, au moins un, magasin d'entrée (1) à travers le four (20),
avec au moins un magasin de sortie (30) pour recevoir et emmagasiner les pâtons (B1, B2) cuits dans le four (20) en produits de boulangerie et de pâtisserie, ainsi que
avec au moins une unité de sortie (40) pour les produits de boulangerie et de pâtisserie et avec une unité de commande (46), sachant que, suite à une demande de client via l'unité de commande (46), les produits de boulangerie et de pâtisserie (B1, B2) demandés sont transportés depuis l'au moins un magasin de sortie (30) vers l'unité de sortie (40) et peuvent y être distribués,
**caractérisé en ce que** le four tunnel (20) ne présente qu'une chambre de four (22) et le dispositif de transport (23) comprend au moins deux bandes transporteuses (24, 26) traversant la chambre de four (22) dans une direction de transport (f4) pour transporter les pâtons (B1, B2) sur ces bandes transporteuses (24, 26), sachant que ces bandes transporteuses (24, 26) sont capables de transporter les pâtons (B1, B2) simultanément à travers la chambre de four (22), sachant que les, au moins deux, bandes transporteuses (24, 26) s'étendent parallèlement l'une à côté de l'autre dans la direction de transport (f4), et sachant qu'un dispositif de commande électrique (50) est prévu, avec lequel les vitesses des bandes transporteuses (24, 26) peuvent être réglées indépendamment l'une de l'autre.

2. Dispositif selon la revendication 1, **caractérisé en ce que** les, au moins deux, bandes transporteuse (24, 26) s'étendent horizontalement ou légèrement inclinées.

3. Dispositif selon la revendication 1 ou 2, **caractérisé en ce que** que les bandes transporteuses (24, 26) présentent des largeurs de transport différentes.

4. Dispositif selon au moins l'une des revendications précédentes, **caractérisé en ce que** les vitesses des bandes transporteuses (24, 26) sont réglables variablement.

5. Dispositif selon au moins l'une des revendications précédentes, **caractérisé en ce que** le dispositif de commande électrique (50) permet de régler une cadence différente pour le temps de séjour des pâtons (B1, B2) transportés de préférence de manière intermittente dans le four (20).

6. Dispositif selon au moins l'une des revendications précédentes, **caractérisé en ce que** le, au moins un, magasin d'entrée (1), le four tunnel (20) et le, au moins un, magasin de sortie (40) sont disposés dans des carcasses différentes (2, 21, 31).

7. Dispositif selon au moins l'une des revendications précédentes, **caractérisé en ce que** des bandes sans fin (6 ; 32) guidées en forme de méandre ou de serpent sont disposées dans le, au moins un, magasin d'entrée et/ou de sortie (1 ; 30), auxquelles orbitent des supports de magasin (8 ; 34) pour recevoir des pâtons (B1, B2) ou des produits de boulangerie et de pâtisserie finis dans le magasin (1 ; 30) respectif, de préférence principalement dans la direction verticale.

8. Dispositif selon au moins l'une des revendications précédentes, **caractérisé en ce que** l'itinéraire de transport pour les pâtons (B1, B2) depuis le magasin d'entrée (1) dans le four (20) est non linéaire.

9. Dispositif selon l'une quelconque des revendications précédentes, **caractérisé en ce que** ledit itinéraire de transport présente au moins une fois, de préférence deux fois, des changements de direction de 90° environ.

10. Dispositif selon au moins l'une des revendications précédentes, **caractérisé en ce qu'**un dispositif de transport (16), qui transporte les pâtons (B1, B2) depuis le magasin d'entrée (1) dans le four (20), est disposé au-dessus du dispositif d'alimentation (4) et s'étend sur sa largeur.

11. Dispositif selon au moins l'une des revendications précédentes, **caractérisé en ce que** le four tunnel (20) est un four à air pulsé.
